# FASCICULE DE BREVET EUROPEEN

(11) **EP 3 583 683 B1**
(45) Date de publication et mention de la délivrance du brevet: **06.09.2023**
(21) Numéro de dépôt: 18707867.0
(22) Date de dépôt: 16.02.2018
(51) Int. Cl.: H02K 19/34, H02K 3/28

(54) **CHAÎNE DE TRACTION MULTICELLULAIRE COMPRENANT UNE MACHINE ÉLECTRIQUE ALIMENTÉE EN BASSE TENSION**
MEHRZELLIGE ANTRIEBSKETTE MIT EINER ELEKTRISCHEN MASCHINE DIE MIT NIEDERSPANNUNG VERSORGT WIRD
MULTICELLULAR TRACTION CHAIN COMPRISING AN ELECTRIC MACHINE POWERED AT LOW VOLTAGE

(30) Priorité: 17.02.2017 FR 1751280
(43) Date de publication de la demande: 25.12.2019
(73) Titulaire: Centre National de la Recherche Scientifique, 75016 Paris (FR); École Normale Supérieure Paris-Saclay, 91190 Gif-sur-Yvette (FR); Université Paris-Saclay, 91190 Gif-sur-Yvette (FR); CentraleSupélec, 91190 - Gif-sur-Yvette (FR); Sorbonne Université, 75006 Paris 6 (FR)
(72) Inventeur: HOANG, Emmanuel, 75010 Paris (FR); LABOURE, Eric, 94230 Cachan (FR)
(74) Mandataire: IPAZ
(86) Numéro de dépôt international: PCT/EP2018/053940
(87) Numéro de publication internationale: WO 2018/149996

(56) Documents cités:
- WO-A2-2010/067021
- DE-A1-102005 032 965
- DE-A1-102013 224 504
- GB-A- 2 474 321
- US-A1- 2017 047 804
- US-B1- 6 208 058

## Description

L'invention se situe dans le domaine des dispositifs de conversion d'énergie électrique, ou machines électriques, et porte en particulier sur une machine électrique conçue pour être alimentée en basse tension.

Les machines électriques sont d'utilisation courante dans les équipements industriels et les chaines de traction électriques. On citera à titre d'exemple les véhicules électriques, les véhicules hybrides, les locomotives, ou les navires. Le principal avantage des moteurs à traction électrique, par rapport aux moteurs à traction thermique, réside dans leur simplicité de réalisation. En effet, ils sont exempts de pièces dont la conception est délicate, ne nécessitent que très peu d'entretien, et n'émettent pas de gaz carbonique.

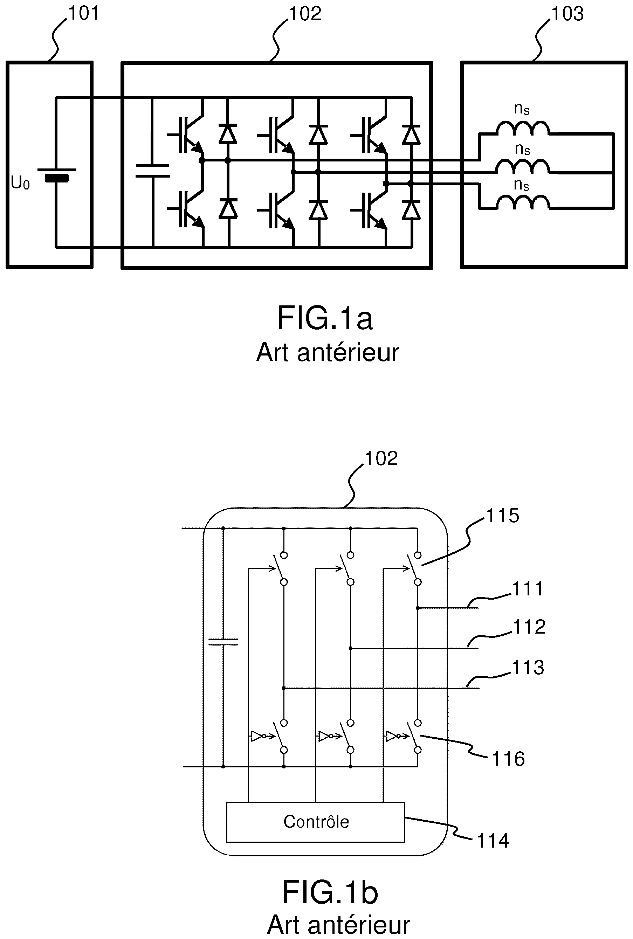

La figure 1a représente la structure d'une chaine de traction selon l'état de l'art, permettant de relier une source d'alimentation en tension continue à une machine électrique polyphasée. Cette structure est la structure classique, utilisée indifféremment soit pour convertir de l'énergie électrique en énergie mécanique (moteur électrique), soit à l'inverse pour produire de l'énergie électrique à partir d'une énergie mécanique (génératrice électrique). Cette chaine de traction est composée de trois éléments principaux : une source d'alimentation 101, de tension *U*₀, un convertisseur de puissance 102, et une machine électrique 103 comprenant des bobinages.

La source d'alimentation 101 est une source de tension continue, comme par exemple une batterie, ou une source de tension alternative redressée afin d'en faire une tension continue, comme c'est le cas par exemple dans le domaine de la traction ferroviaire. Dans les systèmes embarqués, la source d'énergie peut être constituée par la mise en série d'accumulateurs électrochimiques, qui délivrent de manière unitaire une tension faible (de l'ordre de quelques volts par accumulateur), ou par une pile à combustible.

Le convertisseur de puissance 102, ou onduleur de tension, est un circuit électronique permettant de convertir la tension d'alimentation continue délivrée par la source d'alimentation en plusieurs signaux d'alimentation alternatifs décalés en phase. Dans le cas d'un moteur triphasé, il délivre trois signaux d'alimentation.

La figure 1b détaille les éléments qui composent un tel convertisseur de puissance, connu de l'état de l'art. Le convertisseur 102 fonctionne sur le principe des alimentations à découpage. Il comprend un circuit de contrôle 114 qui commute, pour chacun des signaux 111, 112 et 113 délivrés, deux transistors montés en bras de pont, comme par exemple les transistors 115 et 116 pour le signal 111. Le signal délivré a alors une forme de tension en créneaux dont la valeur vaut soit celle du pôle positif de l'alimentation (correspondant généralement à une tension élevée), soit celle du pôle négatif de l'alimentation (généralement la masse). De par la commutation à haute fréquence des interrupteurs, le courant du signal généré dans les bobines qui composent la machine électrique qu'ils alimentent est alternatif. La fréquence et la largeur des impulsions permettent de contrôler les différents paramètres de ces signaux (fréquence, amplitude et phase), et donc la vitesse de rotation et le couple.

La machine électrique 103 est le dispositif final de la chaine de traction, qui entraine un axe de rotation ou est entrainée par cet axe, suivant qu'elle soit utilisée en tant que moteur ou en tant que génératrice. Elle comprend plusieurs phases, généralement trois, c'est-à-dire qu'elle est alimentée par plusieurs courants uniformément décalés en phase (dans le cas d'un moteur triphasé, les trois courants des phases sont respectivement décalés de 120°).

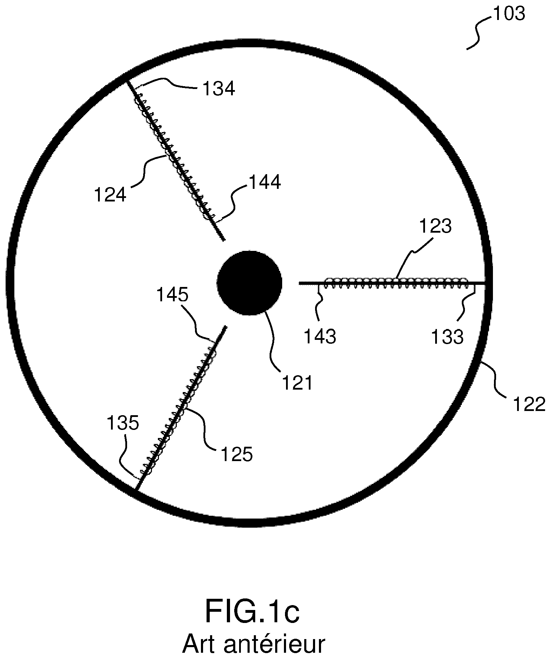

La figure 1c représente une machine électrique polyphasée selon l'état de l'art. Elle comprend un rotor 121, sur lequel est fixé l'axe entrainé en rotation, et un stator 122, pièce cylindrique fait d'un empilement de tôles de fer doux ou de matériau ferromagnétique, contenant plusieurs enroulements électriques, ou bobinages 123, 124 et 125. Chaque bobinage est constitué d'un grand nombre de spires de fil conducteur, le plus souvent en cuivre, recouvertes d'un vernis isolant, formant des enroulements logés dans les encoches du stator. Les bobinages peuvent être réalisés à partir d'une bobine unique, de plusieurs bobines disposées en série, ou de bobines dont les extrémités sont reliées entre elles et alimentées par le même signal, et sont donc mécaniquement et électriquement en parallèle. Un bobinage présente donc un unique couple de bornes (une entrée et une sortie). Dans la figure, ce sont respectivement les bornes 133 et 143 pour le premier bobinage, les bornes 134 et 144 pour le second, et les bornes 135 et 145 pour le troisième.

Les bobinages sont alimentés par un courant alternatif produit par le convertisseur de puissance et associés à l'une des phases de la machine électrique. Chaque bobinage génère un champ magnétique qui lui est propre. Les variations dans le temps du courant d'alimentation des bobinages entrainent une variation dans le temps du niveau de chacun des champs magnétiques générés. Le déphasage appliqué aux tensions d'alimentations des bobinages entraine alors une variation dans le temps de la direction du champ magnétique total produit, qui entraine le rotor en rotation.

Dans l'exemple de la figure 1c, la machine électrique est triphasée, c'est-à-dire que les bobinages sont alimentés par trois courants d'alimentation déphasés. La machine électrique comprend donc trois bobinages, mais il est possible d'augmenter le nombre de bobinages en associant plusieurs bobinages à une même phase, ou bien en modifiant le nombre de phases.

L'ensemble batterie, convertisseur de puissance et machine électrique est connu depuis de nombreuses années. Cependant, ses applications évoluent, ainsi que les attentes en termes de niveaux de puissance et de rendements. C'est le cas en particulier pour les véhicules électriques, où les puissances délivrées déterminent les performances du véhicule, en termes d'accélération, et de vitesse maximum, les rendements déterminent les performances en termes de distance pouvant être parcourue, et où l'encombrement et le poids de la chaine de traction sont des éléments dimensionnant. L'adéquation de la chaine de traction à l'ensemble de ces besoins pose un grand nombre de problèmes dès lors que les puissances fournies deviennent trop importantes.

En ce qui concerne les batteries, elles sont le résultat de la mise en série d'un grand nombre d'accumulateurs unitaires délivrant de faibles tensions, de manière à obtenir une tension d'alimentation pouvant atteindre plusieurs centaines de volts. Se pose alors le problème de l'équilibrage des accumulateurs, la tension aux bornes de chaque élément qui compose la batterie pouvant varier selon la température, son vieillissement, etc. S'agissant d'éléments disposés en série, un écart de tension aux bornes de l'un des accumulateurs peut être compensé par un écart en sens inverse sur un autre élément rendant ces écarts invisibles pour un contrôleur d'état de santé de la batterie ne surveillant que la tension totale. Pour éviter tout risque de destruction des éléments, un équilibrage complexe des tensions délivrées par chacun des accumulateurs est donc requis pour plusieurs familles technologiques d'accumulateurs (système de contrôle des batteries d'accumulateurs : en Anglais BMS « Battery Management System »). Ces systèmes de contrôle ne sont pas adaptés dès lors que les puissances délivrées sont trop importantes. Un autre inconvénient des batteries est que le défaut d'un seul des accumulateurs a pour effet de rendre la batterie, et donc l'ensemble de la chaine de traction, hors d'usage.

Enfin, la manipulation d'une batterie haute tension présente des risques et nécessite des précautions particulières, ce qui n'est pas le cas pour les batteries basse tension (les normes actuelles définissant la basse tension comme la tension de contact à partir de laquelle il est nécessaire de prévoir des systèmes de protection, soit 60 volts en courant continu). A puissance égale, la diminution de la tension d'alimentation de la batterie d'une chaine de traction peut se faire en augmentant l'intensité du courant. Se pose alors le problème de la réalisation de l'électronique de puissance et des bobines de la machine électrique, dont la complexité et la taille vont croitre avec l'intensité du courant. Le choix de la tension délivrée par les batteries d'alimentation d'une chaine électrique est donc le résultat d'un compromis entre d'une part la capacité à délivrer des courants forts, et d'autre part la compacité de la chaine de traction, sa complexité de mise en oeuvre, et la protection des utilisateurs.

En ce qui concerne le convertisseur de puissance, ou onduleur de puissance, le dimensionnement des transistors qu'il comprend dépend des tensions et intensités des courants commutés. Ainsi, les transistors bipolaires à grille isolée (ou transistors IGBT) montés en pont sont généralement associés aux tensions élevées, tandis que d'autres types de transistors, comme les transistors MOSFET (acronyme anglais de Metal Oxide Semiconductor Field Effect Transistor, ou transistor à effet de champ à structure métal-oxyde-semiconducteur), sont généralement associés aux basses tensions. Ces derniers présentent des temps de commutations plus courts que les IGBT, ce qui a une incidence positive sur les pertes de commutations, mais leurs pertes par conduction augmentent avec la tension. C'est pourquoi les transistors IGBT sont le plus souvent utilisés pour les convertisseurs de puissance, la taille de ces transistors augmentant avec les tensions commutées.

En ce qui concerne la machine électrique, si l'intensité du courant dans les bobinages est quasi-sinusoïdale, la tension se présente sous la forme de créneaux alternant tension maximum et tension nulle. Lorsque les puissances d'alimentation sont élevées, les créneaux de tension aux bornes des bobines présentent des fronts montants et descendants très importants. Pendant la durée des fronts, la répartition de la tension entre les spires qui composent les bobinages de la machine électrique ne se fait pas de manière uniforme, notamment à cause d'un phénomène de capacités parasites. Les spires situées aux extrémités de la bobine absorbent alors des niveaux de tension très importants pouvant entrainer des claquages des isolants, ce qui a pour effet de rendre la machine électrique hors d'usage.

Pour les raisons énoncées ci-dessus, il existe donc un besoin pour une solution permettant de réduire la tension des courants d'alimentation dans une chaine de traction électrique, qui résoudrait entre autres :
- le problème de la dangerosité de manutention de la source d'alimentation,
- le problème de l'encombrement des convertisseurs de puissance, et
- le problème du vieillissement prématuré de la machine électrique,
et ce sans préjudice des rendements des éléments de la chaine de traction, ni de la puissance qu'elle délivre.

Afin de réduire l'intensité des courants utilisés, le brevet Européen EP 2 368 319 B1 propose de découper la machine électrique en deux sous-machines électriques couplées. La chaine de traction se décompose alors en deux sous-chaines de traction comprenant chacune une source d'alimentation pour alimenter un convertisseur de puissance délivrant des signaux alternatifs aux phases de trois bobinages positionnés en étoile dans la machine électrique. Ce faisant, la tension et l'intensité des courants sont divisées par deux. Ce procédé n'est cependant pas compatible de toutes les machines électriques car le nombre de bobinages qu'elle doit comprendre est directement proportionnel au nombre de sous-chaines de traction : réaliser un moteur triphasé en divisant par deux les tensions et intensités du courant nécessite exactement six bobines dans la machine électrique. La diminution des tensions et intensités des courants utilisés est alors liée au nombre de bobinages de la machine électrique, et la réalisation d'une chaine de traction de forte puissance alimentée en basse tension ne peut se faire que pour les machines électriques comprenant un très grand nombre de bobinages (une machine électrique 580V nécessiterait une machine électrique à 36 bobinages alimentés en basse tension).

En outre, un tel dispositif génère des perturbations, que le brevet EP 2 368 319 B1 propose de réduire en utilisant des coupleurs magnétiques entre les phases, ce qui a pour effet d'augmenter le volume de la chaine de traction et sa complexité de mise en oeuvre.

On connait du document GB 2 474 321 un moteur du type comprenant un rotor et un stator, le stator contenant au moins un bobinage fait d'enroulements de matériau conducteur isolé, chaque bobinage étant associé à une phase de la machine électrique, chaque bobinage comprenant une pluralité de bobines alimentées indépendamment,

On connait également du document DE 10 2005032965 une machine électrique dans laquelle les bobines de la machine électrique sont composées d'un élément conducteur en forme de U.

L'invention a pour objet une chaine de traction électrique telle que revendiquée.

### Description

L'invention sera mieux comprise et d'autres caractéristiques et avantages apparaîtront mieux à la lecture de la description qui suit, donnée à titre non limitatif, et grâce aux figures annexées parmi lesquelles :
- Les figures 1a, 1b et 1c, déjà décrites, présentent respectivement une chaine de traction, un convertisseur de puissance et une machine électrique polyphasée selon l'état de l'art antérieur à l'invention,
- La figure 2 représente une machine électrique selon un mode de réalisation de l'invention,
- Les figures 3a et 3b représentent les différents éléments nécessaires à l'alimentation des bobines d'une machine électrique selon des modes de réalisation de l'invention,
- Les figures 4a et 4b représentent différents modes de réalisation de convertisseurs de puissance pouvant être utilisés pour mettre en oeuvre l'invention,
- La figure 5 donne un exemple des rendements pouvant être obtenus en fonction de la puissance requise pour une chaîne de traction selon l'invention,
- Les figures 6a et 6b illustrent un mode de réalisation avantageux de l'invention, dans lequel les bobines partielles des bobinages sont réalisées à partir de spires unitaires en forme de U reliées à un circuit électrique.

Dans la description qui suit, le terme « machine électrique » est utilisé pour désigner une machine électrique proprement dite transformant de l'énergie électrique en énergie mécanique (moteur) mais aussi sa réciproque (génératrice). L'invention est représentée dans les figures qui suivent sous la forme d'une machine électrique polyphasée comprenant trois branches, mais s'applique de manière similaire quel que soit le nombre de branches. Elle s'applique également dans le cadre de machines électriques monophasées, constituées d'une ou plusieurs branches raccordées à une même phase. La machine électrique peut indifféremment être de type synchrone (à réluctance variable ou à aimants permanent ou bien encore mixte) ou asynchrone.

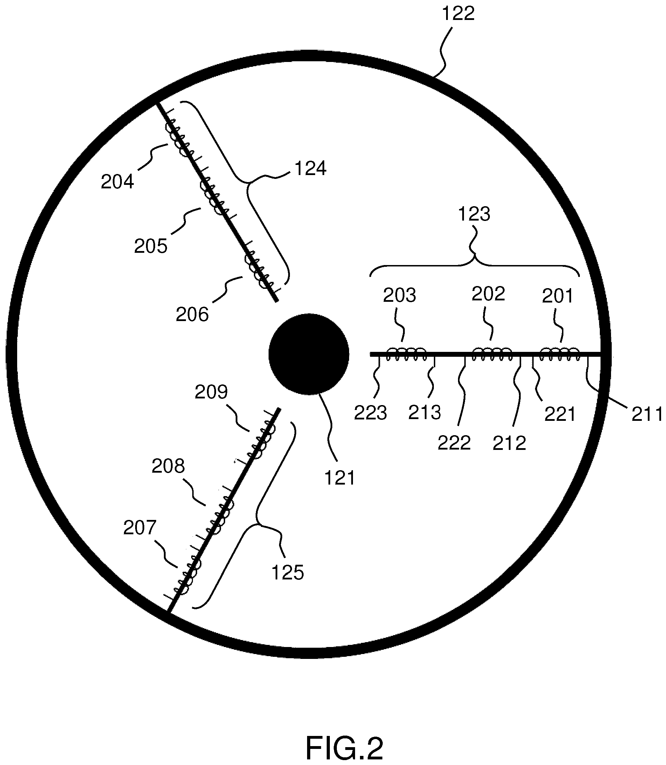

La figure 2 représente une machine électrique selon un mode de réalisation de l'invention. Cette machine électrique s'apparente à une machine électrique selon l'état de l'art en ce qu'elle est constituée d'un rotor 121, et d'un stator 122 comprenant des bobinages (123, 124 et 125) reliés à des phases différentes, mais s'en différencie en ce que les bobinages sont fractionnées en une pluralité de bobines (201, 202, 203, 204, 205, 206, 207, 208, 209) possédant chacune un nombre de spires inférieur au nombre de spires total de l'enroulement. Chaque bobine d'un même bobinage a des bornes (211 et 221, 212 et 222, 213 et 223) qui lui sont propres et par lesquelles elle est alimentée.

L'invention propose donc de fractionner chacun des bobinages en un nombre *k_{B}* de bobines de taille inférieure, ou bobines partielles. Dans l'exemple de la figure 2, chaque bobinage a été fractionné en trois bobines partielles ayant un nombre de spires sensiblement identiques. De manière à présenter un nombre de spires équivalent à celui produit par un bobinage de *N_{S}* spires, chacune des bobines comprend *N_{S}*/*k_{B}* spires. Les bobines partielles appartenant à un même bobinage sont associées à une même phase de la machine électrique. L'invention permet donc de fractionner chaque phase en *k_{B}* sous-phases couplées magnétiquement (les lignes de champs générées par des bobines partielles d'un même bobinage sont orientées dans le même sens), et de constituer ainsi *k_{B}* sous-machines électriques polyphasées (dans la figure 2, les sous-machines électriques sont constituées respectivement par les bobines partielles [201, 204, 207], [202, 205, 208], et [203, 206, 209]).

Dans l'exemple représenté en figure 2, les bobines partielles constituant un même bobinage (par exemple les bobines partielles 201, 202 et 203) sont disposées à la suite les unes aux autres, mais elles pourraient également être entrelacées, mélangées, ou superposées, sans que cela ne porte préjudice à l'invention.

En réalisant chacun des bobinages à partir de bobines partielles de tailles inférieures à celle du bobinage complet, l'invention permet, pour une tension d'alimentation par spire identique à celle de l'état de l'art, d'alimenter chacune des bobines partielles par une tension réduite en proportion du nombre *k_{B}* de sous-bobines. Ce fractionnement revient donc à positionner des blocs de spires en parallèle plutôt qu'en série, afin de pouvoir les alimenter avec des signaux d'alimentation distincts ayant des tensions plus faibles. Les bobines d'un même bobinage sont alors mécaniquement (mais pas électriquement) en parallèle dans un même bobinage. Etant alimentées par des signaux de même phase, les champs magnétiques qu'elles génèrent s'additionnent. La puissance délivrée par la machine électrique est donc équivalente à celle délivrée par les machines électriques selon l'état de l'art.

En adaptant le nombre *k_{B}* de bobines partielles par bobinage, il est possible d'alimenter les bobinages de la machine électrique par des basses tensions.

Pour *k_{B}* = 1, la machine électrique est en tout point identique à une machine électrique selon l'état de l'art.

Lorsque *k_{B}* augmente, la tension d'alimentation de chacune des bobines partielles réduit d'autant.

Pour *k_{B}* = *N_{S}*, la machine électrique selon l'invention présente *N_{S}* bobines partielles réalisées à partir d'une unique spire.

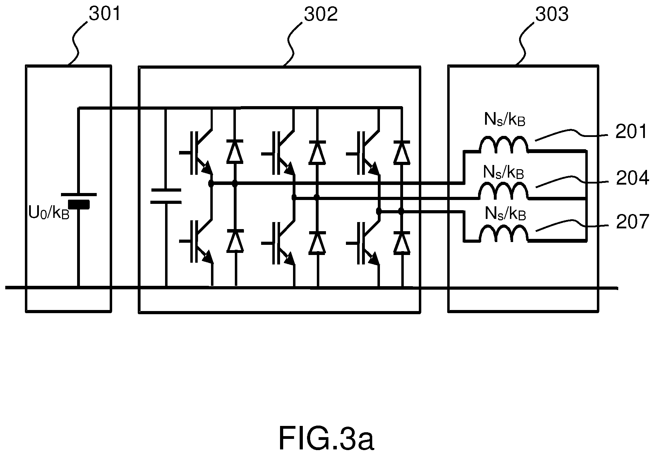

La figure 3a représente les différents éléments nécessaires à l'alimentation des bobines partielles constituant les bobinages d'une machine électrique 303 selon un mode de réalisation de l'invention. La sous-chaine de traction représentée est dédiée à l'alimentation non pas d'un des bobinages de la machine électrique, mais d'un sous-ensemble de ces bobinages, comme par exemple les bobines partielles 201, 204 et 207 de la figure 2, qui sont associées à des phases distinctes. La source de tension continue 301 alimentant le convertisseur de puissance, est une source de tension continue ou redressée délivrant une tension *U*₀/*k_{B}*, avec *U*₀ la tension délivrée par la source d'alimentation dans une chaine de traction selon l'état de l'art (cf. figure 1a).

Le convertisseur de puissance 302 est similaire à un convertisseur de puissance de l'état de l'art, si ce n'est qu'il convertit un signal dont la tension est réduite en proportion de *k_{B}* par rapport à un convertisseur de puissance embarqué dans une chaine de traction standard pour une même puissance délivrée par la machine électrique.

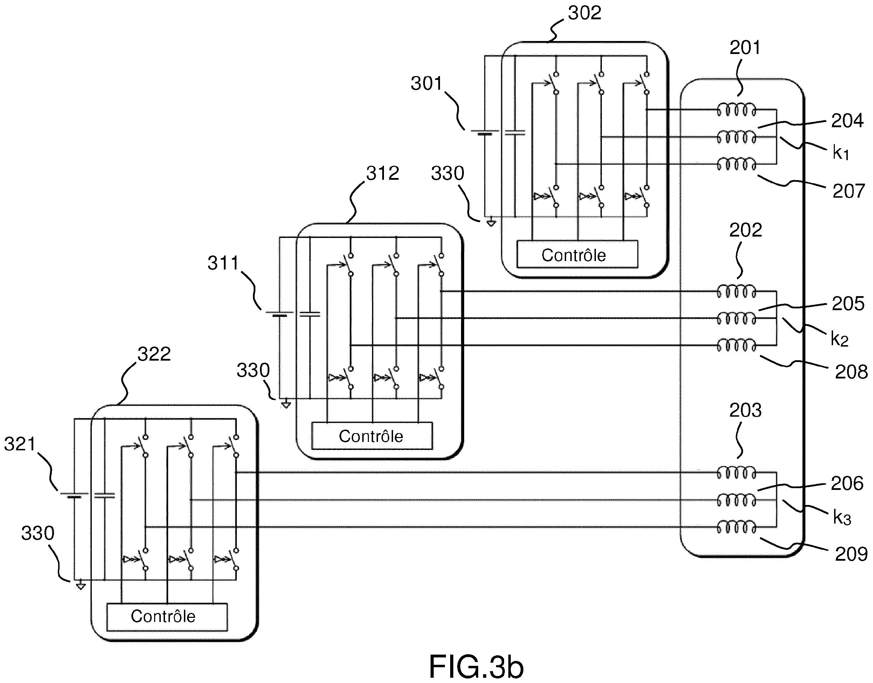

L'invention requiert la mise en oeuvre, en parallèle, d'une pluralité de sous-chaines de traction telles que celle représentée en figure 3a. La figure 3b représente une chaine de traction complète selon l'invention, dans le cas où le nombre *k_{B}* de bobines utilisées pour subdiviser les bobinages de la machine électrique vaut trois, et pour une machine électrique triphasée. L'invention s'applique de manière totalement identique, en ajustant le nombre d'équipements, pour toutes les valeurs de *k_{B}* entières et supérieures à un, et lorsque le nombre de phases du moteur électrique est différent de trois.

Dans la figure 3b, les bobinages de la machine électrique polyphasée sont fractionnés en trois bobines partielles associées à une même phase. En référence à la figure 2a, les bobines partielles 201, 202 et 203 sont associées à la première phase, les bobines partielles 204, 205 et 206 sont associées à la deuxième phase, et les bobines partielles 207, 208 et 209 sont associées à la troisième phase.

Les bobines partielles 201, 204 et 207, dont le nombre de spires vaut *N_{S}*/*k_{B},* sont alimentées par un premier convertisseur de puissance 302, luimême alimenté par une première alimentation 301 délivrant une tension *U*₀/*k_{B}*.

De même, les bobines partielles 202, 205 et 208 sont alimentées par un deuxième convertisseur de puissance 312, alimenté par une deuxième alimentation 311 délivrant une tension *U*₀/*k_{B}*.

Enfin, les bobines partielles 203, 206 et 209 sont alimentées par un troisième convertisseur de puissance 322, alimenté par une troisième alimentation 321.

Avantageusement, les différents convertisseurs de tension sont reliés à un potentiel électrique de référence commun 330, tel qu'une masse.

La chaine de traction selon l'invention résulte donc de la mise en parallèle des différents équipements qui la composent, ce qui a pour effet de permettre à chacun de ses éléments d'opérer à des niveaux de tension plus bas que les chaines de traction de l'état de l'art.

Théoriquement, elle consomme donc autant d'énergie qu'une chaine de traction selon l'art antérieur, et offre le même niveau de puissance. Cependant, cette mise en parallèle des équipements présente de nombreux avantages.

### Avantages liés à l'invention concernant la machine électrique

En ce qui concerne la machine électrique, la structure magnétique de la machine électrique, c'est-à-dire sa forme, son encombrement, le nombre de bobines, le nombre de spires par bobines, la structure des tôles, etc..., n'est pas modifiée par rapport aux machines électriques connues. La seule modification nécessaire à la mise en oeuvre de l'invention dans une machine électrique existante consiste à remplacer chaque bobinage par une pluralité de bobines partielles de tailles inférieures dont les bornes sont reliées à une alimentation distincte. Le remplacement des bobinages par une pluralité de bobines partielles se fait à volume constant. La mise en oeuvre de l'invention dans une machine électrique existante se limite alors à la modification du bobinage.

Dans les machines électriques selon l'état de l'art, la raideur des fronts de tension engendre des problèmes de capacités parasites entre les spires. S'en suit une répartition non uniforme du courant dans les spires de la bobine, en particulier lors des fronts des impulsions de tension. La machine électrique selon l'invention reçoit, pour chacune des bobines constituant un même bobinage, une basse tension d'alimentation. De ce fait, le niveau des fronts des impulsions de tensions qui s'opèrent lors de la commutation des transistors du convertisseur de puissance est réduit. Le risque de claquage des isolants des spires est alors réduit en proportion de la diminution de la tension, ce qui réduit d'autant le vieillissement prématuré de la machine électrique. Il est possible de prendre en compte cette diminution de tension pour diminuer l'épaisseur d'isolant protégeant les conducteurs de cuivre, et ainsi diminuer la surface occupée par les bobines ou augmenter le nombre de spires. Les courants capacitifs parasites engendrés sont eux aussi réduits, ce qui a pour effet de réduire les perturbations électromagnétiques engendrées, et permet de réduire les moyens à mettre en oeuvre afin de respecter les normes de compatibilité électromagnétique.

La réduction des courants capacitifs parasites générés est d'autant plus importante lorsque les différents convertisseurs de tension sont reliés à un potentiel électrique commun.

### Avantages liés à l'invention concernant les convertisseurs de puissance

En ce qui concerne les convertisseurs de puissance, l'invention permet d'utiliser non pas un convertisseur unique et de forte puissance, mais une pluralité de convertisseurs de moyenne ou basse tension et de plus faible puissance.

Le volume occupé par chacun des éléments qui composent le convertisseur, et en particulier celui occupé par les transistors, est fonction des courants et tensions commutées. En diminuant la tension des phases, la taille des composants utilisés diminue.

Ainsi, le volume occupé par un convertisseur de forte puissance ou plusieurs convertisseurs de puissance inférieure est théoriquement équivalent. Cependant, l'utilisation d'une pluralité de convertisseurs moyenne ou faible puissance en parallèle présente plusieurs avantages. L'un des avantages liés au fractionnement de la fonction de conversion d'énergie réside dans la possibilité de pouvoir distribuer l'implémentation de l'électronique au plus près de la machine électrique. Les différents convertisseurs peuvent être répartis en modules de petite taille, configurés géométriquement dans des formes bien précises, intégrés le plus près possible des bobines. Cela permet de raccourcir les connections entre les convertisseurs et la machine électrique, ce qui a pour effet de diminuer les perturbations électromagnétiques et les pertes. La machine électrique et le convertisseur de puissance ne sont alors plus deux entités conçues indépendamment l'une de l'autre, mais une seule entité réalisée de manière er les interactions entre les convertisseurs et la machine électrique. L'utilisation d'un unique convertisseur de forte puissance pose également le problème de la gestion de la thermique. L'utilisation de plusieurs convertisseurs en parallèle de plus basse tension provoque moins d'échauffements, et leur fractionnement en modules indépendants améliore la dissipation de la chaleur produite.

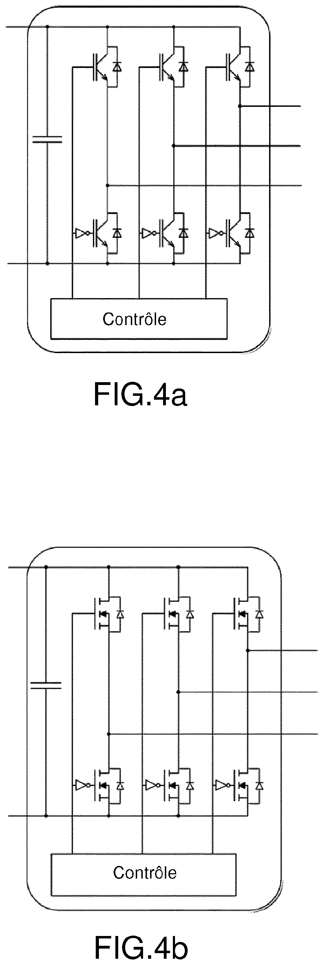

Les convertisseurs de puissance commutant des tensions élevées sont généralement réalisés à partir de transistors IGBT, qui ont moins de pertes en conduction que des transistors MOSFET de même calibre en tension, mais ne sont pas optimaux en termes de pertes en commutation. La figure 4b représente un convertisseur de puissance réalisé à partir de transistors IGBT. Pour optimiser les rendements de ces convertisseurs, il est connu de diminuer les fréquences de commutation, ce qui affecte la qualité de la forme des courants produits pour alimenter les phases de la machine électrique. Le rendement obtenu est donc le fruit d'un compromis entre fréquence de fonctionnement et pertes par commutation.

L'invention permet de diminuer les niveaux de tensions commutées. Quand elles sont suffisamment faibles (typiquement inférieures à 200 Volts), il est alors possible de changer de famille de transistors, et d'utiliser par exemple des transistors MOSFET. La figure 4b représente un convertisseur de puissance réalisé à partir de transistors MOSFET. Ces transistors sont bidirectionnels, et ne nécessitent pas toujours l'utilisation de diodes. Les transistors MOSFET ont des temps de commutation, et donc des pertes par commutation, plus faibles que les transistors IGBT de même calibre en tension. Ils peuvent donc être utilisés à des fréquences très élevées, ce qui améliore la qualité (la forme) des courants délivrés.

En fractionnant le convertisseur de puissance, chaque élément est alors plus compact et peut atteindre des rendements élevés en utilisant des technologies adaptées aux puissances commutées. En augmentant encore le fractionnement des bobinages et convertisseurs, il est possible d'utiliser des transistors qui ne sont habituellement pas employés en électronique de puissance mais en électronique basse puissance. Parmi eux les transistors à semi-conducteur grand gap, comme par exemple les transistors GaN FET (en anglais « Gallium Nitrite Field Effect Transistor », ou transistor à effet de champ à Nitrure de Gallium), qui présentent de très bons rendements et des temps de commutation extrêmement faibles.

### Avantages liés à l'invention concernant les alimentations

En ce qui concerne les alimentations, l'invention permet l'utilisation de batteries de moyenne voire basse tension en parallèle, plutôt que l'utilisation d'une unique batterie haute tension. L'invention est compatible des chaines de traction existantes, les accumulateurs ayant simplement à être connectés par groupes et utilisés en parallèle plutôt qu'en série. Si la tension totale délivrée est équivalente à celle de l'état de l'art, la parallélisation des alimentations autorise, lorsque la tension de chaque batterie est ramenée en dessous de 60 volts, la manutention des équipements sans requérir de précautions particulières.

Un autre avantage à cette parallélisation des sources d'alimentation réside dans le fait que l'équilibrage des batteries de basse tension est plus simple à réaliser que celui des batteries haute tension. De plus, ces batteries sont compatibles avec des systèmes de contrôle des batteries d'accumulateurs (BMS), permettant de surveiller leur état et d'optimiser leur utilisation, bien maîtrisés dans le milieu industriel, ce qui n'est pas le cas des batteries haute tension, où ces systèmes de surveillance deviennent très complexes. La liaison des différents convertisseurs de puissance à un potentiel électrique commun a également pour effet de faciliter la mise en oeuvre d'une électronique de gestion de type BMS.

Enfin, l'utilisation des batteries en parallèle fait que lorsque l'une d'entre elles est défectueuse, la chaine de traction perd en puissance mais reste opérationnelle, les autres batteries alimentant leurs bobines respectives, ce qui permet à la machine électrique de continuer à fonctionner. Il est également possible d'ajuster le courant qui parcourt chacune des batteries, de manière à ce que, lorsque l'une d'elles a un comportement dégradé, elle ne produise plus qu'une partie du courant nominal, les autres batteries compensant cette diminution de la puissance délivrée. Il est ainsi possible d'ajuster les efforts fournis par les batteries, et donc de gérer leur vieillissement.

### Avantage liés à l'invention concernant l'ensemble de la chaine de traction

L'invention permet également d'améliorer le rendement global sur l'ensemble de la chaine de traction, en rendant possible l'extinction de certaines bobines en fonction de la puissance requise.

En effet, de par leur structure, les chaines de traction actuelles alimentent systématiquement la machine électrique par la tension maximale. Lorsque le besoin en puissance est fort, comme par exemple au démarrage d'un véhicule électrique, le rendement de la chaine de traction est très bon. Mais lorsque le besoin en puissance diminue, comme par exemple lorsque le véhicule électrique évolue en régime établi, les impulsions de tension générées par le convertisseur ont des durées très brèves, mais toujours à la tension maximale. Les pertes incompressibles liées à ces variations de tension importantes dans le convertisseur et la machine dégradent le rendement à bas niveau de puissance de la chaine de traction. A bas régime, le rendement obtenu par les chaines de traction selon l'état de l'art est donc sous optimal, ce qui est regrettable d'autant que les véhicules électriques fonctionnent lors de cycles urbains ou de cycles routiers une grande partie du temps à bas niveau de puissance.

L'invention permet de n'utiliser que certaines bobines, en éteignant une partie des convertisseurs de puissance. De ce fait, il est possible de n'alimenter que l'équivalent d'une partie du bobinage. Ce faisant, les batteries sont préservées du vieillissement, et les composants sont moins sollicités, mais surtout, le rendement de la chaine de traction est optimal sur toute la plage de fonctionnement du système.

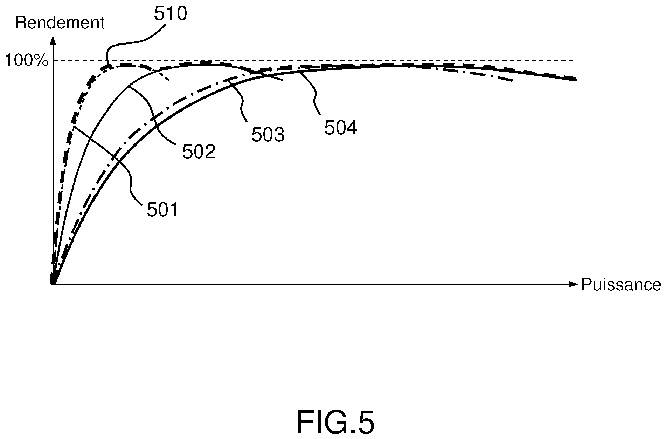

La figure 5 donne un exemple des rendements pouvant être obtenus en fonction de la puissance requise pour une chaîne de traction selon l'invention.

La courbe 501 illustre le rendement de la chaine de traction lorsqu'une seule bobine est activée. La bobine étant alimentée en basse tension, la courbe de rendement augmente très rapidement avec la puissance, puis atteint un palier correspondant à son rendement maximum, avant de diminuer, la chaine de traction n'étant alors plus en mesure de fournir la puissance requise.

La courbe 502 illustre ce même rendement lorsque deux bobines sont activées. La pente de cette courbe est moins raide que celle de la courbe 501, et atteint son maximum de rendement pour des niveaux de puissance supérieurs avant de chuter.

La tendance est la même pour les courbes suivantes, les courbes 503 et 504 représentant le rendement obtenu en fonction de la puissance lorsque respectivement *k_{B}* - 1 et *k_{B}* bobines sont activées.

La courbe 510 représente le rendement pouvant être obtenu en activant/désactivant judicieusement les bobines sur l'ensemble de la plage de puissance. Ce rendement est proche de l'optimal quelle que soit la puissance requise.

L'invention permet donc également d'adapter les moyens mis en oeuvre par la chaine de traction en fonction de la puissance requise, de manière à toujours présenter le meilleur rendement possible, en activant ou désactivant des bobines. Cette extinction peut être réalisée très simplement par l'organe de contrôle des convertisseurs de puissance, en conservant les transistors qu'il commute dans une position « haute impédance » (l'ensemble des transistors du convertisseur élémentaire sont ouverts), ce qui a pour effet de couper l'alimentation électrique des bobines partielles que le convertisseur alimente.

Enfin, l'invention est compatible de la plupart des améliorations proposées pour les chaines de traction de l'état de la technique, comme par exemple celle présentée dans le brevet EP 2 368 319 B1, où la machine électrique comprend plusieurs réseaux de bobinages en étoile, chacun des réseaux étant alimenté par un convertisseur de puissance indépendant. L'invention appliquée à ce brevet consisterait à fractionner chacun des bobinages de chacun des réseaux en étoile, ainsi que chacun des convertisseurs qui les alimentent.

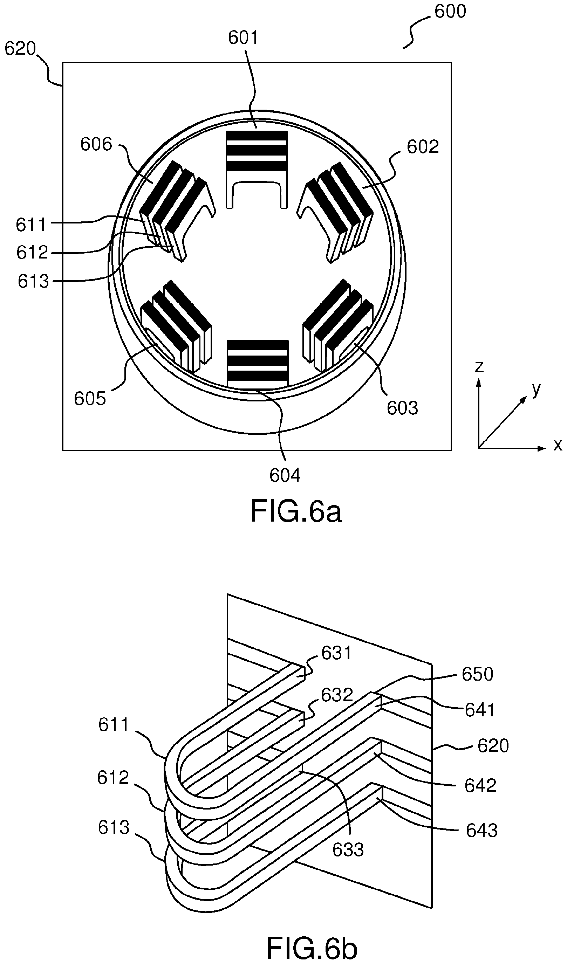

Les figures 6a et 6b illustrent un mode de réalisation avantageux d'une chaine de traction selon l'invention, fourni à titre d'illustration, dans lequel les bobines partielles sont réalisées à partir de spires unitaires en forme de U reliées à un circuit électrique. Dans ce mode de réalisation, les bobines sont avantageusement réalisées à l'aide de conducteurs de section importante, comme par exemple des conducteurs à méplat.

La réalisation de l'enroulement des spires d'un bobinage est d'autant plus complexe que le diamètre des éléments conducteurs utilisés est important. Ainsi, les constructeurs de machines électriques privilégient l'utilisation d'un grand nombre de spires d'un conducteur circulaire de petite section plutôt qu'une seule spire de conducteur de section plus importante pouvant prendre la forme d'un conducteur à section rectangulaire (méplat). Pourtant, de tels conducteurs offrent un coefficient de remplissage bien plus important, et donc une surface occupée plus réduite pour une épaisseur de cuivre identique, deux spires adjacentes de conducteur circulaires fin laissant nécessairement un espace vide entre elles. De plus, la proportion d'isolant par rapport à la surface de cuivre est bien inférieure. Mais la malléabilité des conducteurs de petite section (par exemple 0,5 mm²) fait qu'ils sont de manière générale privilégiés par rapport aux conducteurs de section plus importante (par exemple 5 mm²). C'est d'autant plus vrai pour les conducteurs à méplats, dont la section se présente sous la forme d'un parallélépipède rectangle aux bords arrondis. Pour une surface de cuivre équivalente, ce type de conducteur est plus adapté aux machines électriques qu'un conducteur circulaire car sa largeur est plus grande que son épaisseur, mais son bobinage sous forme de spires consécutives s'avère particulièrement complexe.

Or les enroulements des bobinages d'une machine électrique sont généralement de forme rectangulaire, et il est connu que le champ magnétique induit par de tels bobinages provient en grande partie des parties situées dans le circuit magnétique (grands cotés), et très peu des têtes de bobines (petits côtés). En fractionnant le bobinage et les convertisseurs de puissance, l'invention se prête particulièrement bien à l'utilisation de conducteurs de grande section car elle ne nécessite pas nécessairement de les conformer en enroulements successifs, dès lors que le nombre de spires envisagé est faible. Pour ceci, l'invention propose d'utiliser des conducteurs en forme de U, pouvant être des conducteurs méplats, et de considérer chaque spire en forme de U comme étant l'une des bobines partielles de l'invention. Les extrémités des U formant les spires correspondent alors aux bornes des bobines partielles qui composent un bobinage, et sont aptes à être reliées à un convertisseur de puissance.

Avantageusement, les extrémités de chaque spire sont raccordées mécaniquement et électriquement à un circuit imprimé, ou circuit électrique. Selon le mode de réalisation, les extrémités des spires en formes de U peuvent être indifféremment soudées, ou agrafées au circuit imprimé, et en contact avec une piste conductrice qui le compose. Les pistes du circuit imprimé permettent d'acheminer le signal d'alimentation entre le convertisseur de puissance et la spire. Selon un autre mode de réalisation, le circuit imprimé auquel les spires sont reliées comprend également l'électronique de puissance nécessaire à la mise en oeuvre de la fonction de conversion de puissance générant les signaux polyphasés.

La figure 6a illustre ce mode de réalisation. Dans l'exemple, la machine électrique 600 est une machine polyphasée comprenant six bobinages 601 à 606. Si l'on considère, par exemple, le bobinage 606, il est fractionné en trois bobines partielles 611, 612 et 613, associées à une même phase des convertisseurs. Ces bobines partielles sont constituées d'une unique spire d'un conducteur d'épaisseur importante en forme de U, agrafée ou soudée mécaniquement et électriquement par les extrémités du U à un circuit imprimé 620. Le circuit imprimé achemine le signal alimentant les spires, et peut avantageusement contenir l'électronique de puissance nécessaire à la transformation d'un courant continu d'alimentation en courants alternatifs polyphasés.

La figure 6b est une représentation en perspective de l'une des bobines de la machine électrique. Dans l'exemple, on considérera toujours le bobinage 606. Ce bobinage est alors constitué des trois spires en forme de U numérotées 611, 612 et 613. Ces spires sont conformées ou non autour d'un élément de la carcasse (non représenté) de la machine électrique, qui permet, de même que le circuit imprimé, leur maintien en position. Les deux extrémités (631 et 641, 632 et 642, 633 et 643) de chacune de ces spires sont reliées à une piste du circuit imprimé 620. La jonction 650 entre les spires et le circuit imprimé peut être réalisé par agrafage, soudure, colle, ou tout autre moyen permettant de relier mécaniquement et électriquement ces éléments.

Dans la représentation de la figure 6b, les spires sont espacées les unes des autres, mais leur agencement dans une machine électrique se fait avantageusement en diminuant au maximum cet espacement.

La machine électrique représentée en figures 6a et 6b présente ainsi un coefficient de remplissage plus important que les machines électriques selon l'état de l'art. De plus, les couches d'isolant séparant les différentes spires sont d'autant plus faibles que la tension à leurs bornes est faible, améliorant ainsi d'autant le coefficient de remplissage.

En résumé, l'invention propose, plutôt que d'utiliser des machines électriques polyphasées dont les bobinages sont alimentés par des signaux de tension élevée, de fractionner les bobinages en plusieurs bobines partielles, et d'alimenter chacune de ces bobines partielles par des signaux de tension plus faible. Les bobines partielles composant la machine électrique résultante peuvent être reliées à des convertisseurs de puissance basse tension mis en parallèle, ce qui, pour une puissance délivrée équivalente, présente de nombreux avantages :
- Compatibilité avec les machines électriques existantes, sous réserve d'une modification des bobinages seulement, chaque bobine partielle composant le bobinage devant alors présenter des bornes indépendantes ;
- Amélioration de la résistance au vieillissement de la machine électrique, de par la diminution des tensions commutées, ainsi que de sa fiabilité, le fonctionnement de la machine électrique n'étant pas compromis en cas de défaut d'une ou plusieurs des bobines ;
- Amélioration du coefficient d'occupation des bobinages, du fait de la réduction de l'épaisseur des isolants et/ou de la réalisation des bobines partielles à partir de conducteurs de section importante, comme les conducteurs à méplats.

- Réduction des courants parasites liés aux couplages capacitifs entre les conducteurs et le circuit magnétique de la machine, de par le raccordement des convertisseurs de puissance à un même potentiel de référence ;
- Manipulation sans risque des éléments composant la chaine de traction, sous réserve que la parallélisation des équipements soit telle que les bobines puissent être alimentées par des basses tensions ;
- Utilisation de nouvelles technologies de transistors pour la réalisation des convertisseurs de puissance, dans le but d'améliorer les rendements des convertisseurs et de diminuer la surface requise ;
- Possibilité de compartimenter le convertisseur de puissance, et ainsi de l'intégrer au plus près de la machine électrique, améliorant ainsi les rendements (diminution de la longueur des pistes ou des conducteurs reliant la machine électrique au convertisseur de puissance), la thermique, le volume occupé et les émissions électromagnétiques ;
- Ajustement de la puissance délivrée par chacune des batteries, permettant une meilleure prise en compte et gestion de leur vieillissement ;
- Gestion du fractionnement de puissance en ajustant le nombre de bobines alimentées, ce qui permet d'obtenir le rendement optimal de la chaine de traction quel que soit le régime de la machine électrique, et de préserver les composants de la chaine de conversion.

## Revendications

1. Chaine de traction électrique, comprenant une machine électrique, du type comprenant un rotor (121) et un stator (122), le stator (122) contenant au moins un bobinage (123, 124, 125 ; 601-606) fait d'enroulements de matériau conducteur isolé, chaque bobinage (123, 124, 125 ; 601-606) étant associé à une phase de la machine électrique, chaque bobinage (123, 124, 125 ; 601-606) comprenant une pluralité de bobines (201-203, 204-206, 207-209 ; 611, 612, 613) alimentées indépendamment, les bobines (201-203, 204-206, 207-209 ; 611, 612, 613) d'un même bobinage (123, 124, 125; 601-606) ont un nombre de spires sensiblement équivalent, **caractérisée en ce qu'**elle comprend une pluralité de convertisseurs de puissance (302, 312, 322) configurés pour générer des signaux d'alimentation alternatifs associés aux différentes phases de la machine électrique, et une pluralité de sources d'alimentation continue (301), chaque source d'alimentation continue (301) étant associée à un convertisseur de puissance (302, 312, 322) distinct, les bobines (201-203, 204-206, 207-209 ; 611, 612, 613) d'un même bobinage (123, 124, 125 ; 601-606) étant alimentées par des signaux d'alimentation associés à une même phase générés par des convertisseurs de puissance (302, 312, 322) distincts, les lignes de champ magnétique générées par des bobines (201-203, 204-206, 207-209; 611, 612, 613) d'un même bobinage (123, 124, 125 ; 601-606) étant orientées dans le même sens.

2. Chaine de traction électrique selon la revendication 1, dans laquelle les bobinages (123, 124, 125 ; 601-606) de la machine électrique comprennent tous un même nombre de bobines (201-203, 204-206, 207-209 ; 611, 612, 613) alimentées indépendamment.

3. Chaine de traction électrique selon la revendication 1 ou 2, dans laquelle les bobines (611, 612, 613) de la machine électrique sont composées d'un unique élément conducteur en forme de U dont les extrémités sont reliées mécaniquement et électriquement à un circuit imprimé (620) par lequel elles sont alimentées.

4. Chaine de traction électrique selon la revendication 3, dans laquelle les convertisseurs de puissance sont réalisés sur ledit circuit imprimé (620).

5. Chaine de traction électrique selon l'une des revendications 1 et 4, dans laquelle les convertisseurs de puissance (302, 312, 322) sont réalisés à partir de transistors de type MOSFET ou GaN FET.

6. Chaine de traction électrique selon l'une des revendications précédentes, dans laquelle les convertisseurs de puissance (302, 312, 322) sont reliés à un potentiel électrique commun.

7. Chaine de traction électrique selon l'une des revendications précédentes, dans laquelle les sources d'alimentation (301) délivrent un signal basse tension.

8. Chaine de traction selon l'une des revendications précédentes, dans laquelle les convertisseurs de puissance (302, 312, 322) sont aptes à couper l'alimentation électrique des bobines (201-203, 204-206, 207-209 ; 611, 612, 613) de la machine électrique en fonction d'une puissance requise.

## Patentansprüche

1. Elektrische Zugkette, umfassend eine elektrische Maschine der Art, umfassend einen Rotor (121) und einen Stator (122), wobei der Stator (122) mindestens eine Wicklung (123, 124, 125; 601-606) enthält, die aus Aufwicklungen aus isoliertem leitfähigem Material gemacht ist, wobei jede Wicklung (123, 124, 125; 601-606) einer Phase der elektrischen Maschine zugeordnet ist, jede Wicklung (123, 124, 125; 601-606) umfassend eine Vielzahl von Spulen (201-203, 204-206, 207-209; 611, 612, 613), die unabhängig gespeist werden, wobei die Spulen (201-203, 204-206, 207-209; 611, 612, 613) einer gleichen Wicklung (123, 124, 125; 601-606) eine im Wesentlichen äquivalente Anzahl von Windungen aufweisen, **dadurch gekennzeichnet, dass** sie eine Vielzahl von Leistungswandlern (302, 312, 322), die zum Erzeugen von alternativen Speisesignalen konfiguriert sind, die unterschiedlichen Phasen der elektrischen Maschine zugeordnet sind, und eine Vielzahl von kontinuierlichen Speisequellen (301) umfasst, wobei jede kontinuierliche Speisequelle (301) einem separaten Leistungswandler (302, 312, 322) zugeordnet ist, wobei die Spulen (201-203, 204-206, 207-209; 611, 612, 613) einer gleichen Wicklung (123, 124, 125; 601-606) durch Speisesignale gespeist werden, die einer gleichen Phase zugeordnet sind, die durch separate Leistungswandler (302, 312, 322) erzeugt werden, wobei die Magnetfeldlinien, die durch Spulen (201-203, 204-206, 207-209, 611, 612, 613) einer gleichen Wicklung (123, 124, 125; 601-606) erzeugt werden, in der gleichen Richtung ausgerichtet sind.

2. Elektrische Zugkette nach Anspruch 1, wobei die Wicklungen (123, 124, 125; 601-606) der elektrischen Maschine alle eine gleiche Anzahl von Spulen (201-203, 204-206, 207-209; 611, 612, 613) umfassend, die unabhängig gespeist werden.

3. Elektrische Zugkette nach Anspruch 1 oder 2, wobei die Spulen (611, 612, 613) der elektrischen Maschine aus einem einzigen U-förmigen leitfähigen Element bestehen, dessen Enden mechanisch und elektrisch mit einer gedruckten Schaltung (620) verbunden sind, durch die sie gespeist werden.

4. Elektrische Zugkette nach Anspruch 3, wobei die Leistungswandler auf der gedruckten Schaltung (620) ausgeführt sind.

5. Elektrische Zugkette nach einem der Ansprüche 1 bis 4, wobei die Leistungswandler (302, 312, 322) aus Transistoren der Art MOSFET oder GaN FET ausgeführt sind.

6. Elektrische Zugkette nach einem der vorstehenden Ansprüche, wobei die Leistungswandler (302, 312, 322) mit einem gemeinsamen elektrischen Potential verbunden sind.

7. Elektrische Zugkette nach einem der vorstehenden Ansprüche, wobei die Speisequellen (301) ein Niederspannungssignal abgeben.

8. Elektrische Zugkette nach einem der vorstehenden Ansprüche, wobei die Leistungswandler (302, 312, 322) geeignet sind, um die elektrische Speisung der Spulen (201-203, 204-206, 207-209; 611, 612, 613) der elektrischen Maschine in Abhängigkeit von einer erforderlichen Leistung zu unterbrechen.

## Claims

1. Electric power train, comprising a **characterized in that** it comprises an electric, of the type comprising a rotor (121) and a stator (122), the stator (122) containing at least one winding (123, 124, 125 ; 601-606) made from coilings of insulated conductive material, each winding (123, 124, 125 ; 601-606) being associated with a phase of the electric machine, each winding (123, 124, 125 ; 601-606) comprising a plurality of coils (201-203, 204-206, 207-209 ; 611, 612, 613) supplied independently, the coils coils (201-203, 204-206, 207-209 ; 611, 612, 613) of one of the same winding (123, 124, 125; 601-606) having substantially equivalent number of turns, **characterized in that** it comprises a plurality of power inverters (302, 312, 322) configured in order to generate AC supply signals associated with the different phases of the electric machine, and a plurality of DC supply sources (301), each DC supply source (301) being associated with a distinct power inverter (302, 312, 322), the coils (201-203, 204-206, 207-209 ; 611, 612, 613) of one and the same winding (123, 124, 125 ; 601-606) being supplied by power signals associated with one and the same phase generated by distinct power inverters (302, 312, 322), the field lines generated by coils (201-203, 204-206, 207-209 ; 611, 612, 613) of one and the same winding (123, 124, 125 ; 601-606) being oriented in the same direction.

2. Electric power train according to claim 1, wherein the windings (123, 124, 125 ; 601-606) each comprise one and the same number of coils (201-203, 204-206, 207-209 ; 611, 612, 613) supplied independently.

3. Electric power train according to claim 1 or 2, wherein the coils (611, 612, 613) of the electric machine are composed of a single U-shaped conductive element, the ends of which are mechanically and electrically connected to a printed circuit board (620) by means of which they are supplied.

4. Electric power train according to claim 3, in which the power inverters are produced on said printed circuit board (620).

5. Electric power train according to one of claims 1 and 4, in which the power inverters (302, 312, 322) are produced based on transistors of the MOSFET or GaN FET type.

6. Electric power train according to any one of the preceding claims, in which the power inverters (302, 312, 322) are connected to a common electric potential.

7. Electric power train according to any one of the preceding claims, in which the power sources (301) deliver a low-voltage signal.

8. Power train according to one of any one of the preceding claims, in which the power inverters (302, 312, 322) are capable of turning off the electrical supply of the coils (201-203, 204-206, 207-209 ; 611, 612, 613) of the electric machine as a function of a required power.
